# EUROPÄISCHE PATENTANMELDUNG

(11) **EP 2 325 616 A1**
(43) Veröffentlichungstag der Anmeldung: **25.05.2011**
(21) Anmeldenummer: 09014440.3
(22) Anmeldetag: 19.11.2009
(51) Int. Cl.: G01K 11/16

(54) **Vorrichtung zur irreversiblen Kennzeichnung einer kritischen Temperaturüberschreitung von Blutbeuteln**

(71) Anmelder: On Point Indicators GmbH, 9020 Klagenfurt (AT)
(72) Erfinder: Ludescher, Gernot, A-9500 Villach (AT); Lengfeldner, Erhard, A-9020 Klagebfurt (AT)
(74) Vertreter: Riebling, Peter

(57) **Zusammenfassung**

Vorrichtung zur irreversiblen Kennzeichnung einer kritischen Temperaturüberschreitung von Blutbeuteln, die eindeutig und irreversibel auf die Überschreitung einer definierten, kritischen Temperatur mit einem optisch sichtbaren Farbumschlag reagiert, dadurch gekennzeichnet, dass sie erst nach Erreichen einer ausreichenden, auf die kritische Temperatur bezogenen Unterkühlung deutlich sichtbar aktivierbar ist und diese beiden Merkmale kombiniert mit ein und derselben Substanz abbildet.

## Beschreibung

### Bestehende Lösungsansätze:

Ansätze der Überwachung von Erythrozytenkonzentratbehältern gibt es bereits aus den 1960er Jahren und inzwischen in kaum zählbarem Umfang. Dennoch hat sich aufgrund der Nicht-Praktikabilität dieser Erfindungen kein, diesen Erfindungen entsprechendes Produkt bisher im Markt durchgesetzt.

So wird zum Beispiel im Patent US2,865,930B bereits eine schmelzbare Substanz dargestellt, die einen Festkörper in einer Position hält, solange, bis die kritische Schmelztemperatur der schmelzenden Substanz überschritten wurde und damit der Festkörper nachweislich seine ursprüngliche Position verlässt und damit die Überschreitung der kritischen Temperatur anzeigt. Dieser Nachweis ist eine notwendige Voraussetzung aber nicht ausreichend für einen effektiven Schutz der Erythrozytenkonzentrate. Zusätzlich kann es zu Verwechslungen kommen, wenn bei einem möglichen Wiedereinkühlen des Erythrozytenkonzentrats diese am Kopf zu stehen kommt und der Festkörper dadurch in eine, der Ausgangslage ähnliche Position zu liegen kommt und damit der Beobachter eine vorangehende Überschreitung der kritischen Temperatur nicht sofort erkennen kann. Die notwendige Einbringung in den Blutbeutel und der damit verbundene direkte Kontakt vom Blut mit dieser Vorrichtung ist ebenfalls nicht praktikabel und sehr bedenklich, denn die Sterilisation der Vorrichtung ist auf Grund deren Temperatursensitivität nicht klar und ein Brechen des beschriebenen Gefäßes für den Erythrozytenkonzentrat-Empfänger ist äußert gefährlich.

Auch die im Patent US 6,726,671 B2 beschriebene Lösung offenbart ähnliche Schwächen wie bereits oben beschrieben. Auch hier ist die Einbringung direkt in den Blutbeutel vorgeschlagen was hinsichtlich der Sterilisation und Dichtheit der Vorrichtung große Bedenken offen lässt. Wiederum ist auch nur der reine Nachweis eine Überschreitung einer kritischen Temperatur beschreiben und keinerlei qualitätssicherende Maßnahme zur Gewährleistung der ausreichenden Kühlung vor Ausgabe der Erythrozytenkonzentrate berücksichtigt.

Der Erfindung liegt deshalb die Aufgabe zugrunde, eine Vorrichtung zur irreversiblen Kennzeichnung einer kritischen Temperaturüberschreitung von Blutbeuteln so weiterzubilden, dass die Kombination mit einer ausreichenden Vorkühlung zur Aktivierung des Indikators jedenfalls notwendig ist, um diesen Indikator nachträglich zu aktivieren.

Zur Lösung der gestellten Aufgabe ist die Erfindung durch die technische Lehre des Anspruches 1 gekennzeichnet.

Der Begriff "Blutbeutel" oder "Erythrozytenkonzentrat-Behälter" wird im Sinne der Erfindung weit verstanden. Es handelt sich im weitesten Sinn um einen flexiblen Flüssigkeitsbehälter, in dem entweder Vollblut oder die Bestandteile des Vollblutes angeordnet sind, wie z.B. Erythrozyten, Blutplasma und andere Fraktionen des Vollblutes. Wenn demgemäß in der späteren Beschreibung der Begriff "Blutbeutel" oder "Erythrozytenkonzentrat-Behälter" verwendet wird, ist dies nicht einschränkend zu verstehen.

Die Vorrichtung sieht den Einsatz einer thermoreaktiven, irreversiblen und in einem definierten, unter dem Umschlagstemperaturbereich liegenden Temperaturband aktivierbare Substanz vor, die in unterschiedlichen Verfahren auf das Erythrozytenkonzentrat aufgebracht werden kann. Dabei ist unter anderem aber nicht ausschließlich die Aufbringung über einen selbsttragenden Indikator geplant, wobei die thermoreaktive Substanz im ersten Zuge auf den Indikator aufgebracht wird und dieser Indikator in einem zweiten Schritt selbstragend auf das Erythrozytenkonzentrat appliziert wird.

Die Erfindung beschreibt deshalb eine Vorrichtung, die in warmer oder in kühler Umgebung auf Blutbeutel aufgebracht werden kann, um die Überschreitung einer kritischen Temperatur dieser Blutbeutel dauerhaft und irreversibel anzuzeigen. Die unbedingte Notwendigkeit der vorausgehenden Kühlung der Blutbeutel vor der Ausgabe dieser (siehe Problembeschreibung unten) wird dabei berücksichtigt, indem die Vorrichtung vor der bereits erwähnten Vorab-Kühlung nicht aktivierbar ist.

Das Hauptproblem bei Blutbeuteln in Zusammenhang mit der Temperatur ist dabei, dass Blut, konkret rote Blutkörperchen oder auch Erythrozytenkonzentrate, nach einer Erwärmung über 10°C Kerntemperatur nicht mehr wieder eingekühlt werden dürfen, da es ansonsten zu der sogenannten Hämolyse kommen kann. Dabei zersetzen sich die roten Blutkörperchen in einer Art, dass es bei eine nachfolgenden Transfusion des Blutes beim Patienten zu physiologischen Problemen bis hin zum Versagen diverser Organe kommen kann. So wird das Erythrozytenkonzentrat vor dem direkten Transfundieren zwar auf die Körpertemperatur des Erythrozytenkonzentrat-Empfängers erwärmt, alle nicht transfundierten Erythrozytenkonzentrate, die die kritische Kerntemperatur (5) von 10°C überschritten haben, dürfen jedoch nicht mehr in den Kühlkreislauf gelangen.

Wichtig ist in diesem Zusammenhang auch festzustellen, dass bei einer kritischen Kerntemperatur (das ist die Temperatur im Innenraum des Blutbeutels) von 10°C ein, am Erythrozytenkonzentrat-Behälter festgestellter Temperaturgradient von ca. 1,5 bis 2°C (je nach Durchmischung des Erythrozytenkonzentrats) festzustellen ist, also einer Absoluttemperatur von ca. 11,5 bis 12°C entspricht. Damit muss die Vorrichtung eine um diese 1,5 bis 2°C höhere Temperatur anzeigen um die Überwachung der geforderten Kerntemperatur von 10°C zu gewährleisten.

All diese Untersuchungen und Erkenntnisse haben zu einer sogenannten 30 Minutenregel geführt die aussagt, dass Erythrozytenkonzentrate genau 30 Minuten bei Raumtemperatur von ca. 23-24°C gelagert werden dürfen, um diese 10°C Kerntemperatur nicht zu überschreiten und danach transfundiert oder sofort wieder eingekühlt werden müssen. Diese 30 Minutenregel setzt aber voraus, dass die Blutbeutel vor Entnahme aus der Kühlung eine Kerntemperatur von 3-6°C oder darunter, jedenfalls aber über 0°C, erreicht haben.

Hier setzt nun die Erfindung ein. So kann die erfindungsgemäße Vorrichtung nicht über einer Mindesttemperatur von ca. 6-8°C aktiviert werden und verhindert damit die frühzeitige Entnahme eines Blutbeutels aus der Kühlung unter besonderer Berücksichtigung des bereits oben angeführten Temperaturgradienten zwischen dem Kern und der Außenseite des Erythrozytenkonzentratbehälters.

Die Aktivierung des Indikators ist gleichzeitig eindeutig erkennbar über einen Farbumschlag von einer sehr hellen Farbe (wie z.B. gelblich) nach einem sehr dunkelblau-schwärzlichen Farbeindruck. Die, bei einer Überschreitung der kritischen Temperatur stattfindende, irreversible und eindeutige Anzeige der Vorrichtung ist eine weitere Forderung an den erfindungsgemäßen Indikator.

Wesentliches Merkmal der Erfindung ist demgemäß, dass zur Aktivierung des Indikators erst eine bestimmte Vorkühlphase stattfinden muss, um überhaupt diesen Indikator später aktivieren zu können. Dies soll sicherstellen, dass der Blutbeutel ausreichend gekühlt wird, bevor er zur Verwendung ausgegeben wird. Dies ist ein zusätzlicher Sicherheitsaspekt, der durch die Ausbildung der Indikatorsubstanz gewährleistet wird.

Ferner soll sichergestellt werden, dass, wenn die Indikatorsubstanz nach der geforderten Vorkühlung "scharf geschaltet" ist, eine zuverlässige Anzeige einer nicht erlaubten Temperaturüberschreibung gewährleistet ist.

Für die Aufbringung der thermochromen Substanz auf den Indikator sind unter anderem aber nicht ausschließlich folgende Verfahren vorgesehen:
- Offsetdruck
- Flexodruck
- Rastertiefdruck
- Tampondruck
- Ink-Jet-Druck
- Dispenser-Applikation
- Rollen-Applikation
- Rakel-Applikation
- Streich-Applikation
- Sprüh-Applikation

Die Aufbringung der Substanz kann jedoch auch direkt auf den Prüfling erfolgen und das sowohl auf der Außenwand als auch der Innenwand des Prüflings. Bei der Aufbringung auf die Innenwand des Prüflings (Blutbeutels) soll der Indikator jedoch keinen direkten Kontakt mit dem flüssigen Inhalt des Blutbeutels erhalten.

Bei den Substanzen kann es sich unter anderem aber nicht ausschließlich um folgende handeln:
- Salze/Oxide mit Phasenübergang im relevanten Temperaturbereich
- Salze mit Kristallwasserverlust im relevanten Temperaturbereich
- oxidierbare Substanzen
- Substanzen mit Schmelzpunkt im relevanten Temperaturbereich
- Substanzen mit Zersetzung im relevanten Temperaturbereich
- Mehrkomponentensysteme mit Aktivierung im relevanten Temperaturbereich
- Monokarbonsäuren
- Dikarbonsäuren

Bei der Substanz handelt es sich bevorzugt um eine Variante einer Dikarbonsäure mit der unten angeführten Strukturformel, die durch weitere Veresterungsschritte, Synthesen aber auch Kombination mit Modifiern und teilweise auch Nukleierungskeimen veredelt und in die endgültige Qualität gebracht wird:

R1-CΞC-C=C-R2

R1 = R2 oder R1 ≠ R2
R1, R2 ₌ H, Alkyl, Aryl, Alkylether, Alkylsäure, Alkylsäureester, Alkylsäureamid, weitere Diacetylen-Einheit enthaltend, weitere Variationen.
R_{1 =} C₁₂H₂₅
R₂ = C₈H₁₆C(O)OCH₂CH(CH₃)C₂H₅
C₈H₁₆C(O)ONHC₄H₉
C₈H₁₆C(0)ONa

Jedenfalls ist die verwendete Substanz immer unter ihrem eigentlichen Schmelzpunkt, der ja den Schmelzpunkt der kritischen Temperatur darstellt, aktivierbar. Die Erfindung sieht auch Stoffe vor, die unter Einfluss von unterschiedlichen Behandlungen wie z.B. kurz- und/oder langwelligen Strahlen, Lichtquellen oder ähnliches eine Veränderung ihres Farbeindrucks oder Form oder Gestalt oder ähnliches eindeutig anzeigen.

Wichtig für die Erfindung ist jedoch, dass es sich ausschließlich um ein und dieselbe Substanz handelt, die sowohl die Aktivierbarkeit als auch die Anzeige der Überschreitung der kritischen Temperatur und in dieser Kombination gewährleistet. Es werden also nicht zwei verschiedene Substanzen mit unterschiedlichen Eigenschaften und Anzeigewerten verwendet.

Einzigartig und technologisch sehr anspruchsvoll ist dabei auch die Einstellung dieser Substanz, sowohl auf den unteren, ersten Farbumschlag bei Aktivierung, als auch auf die zweite, bei Überschreitung der oberen Grenztemperatur angezeigte Farbänderung, die sich ja jeweils über definierte Temperaturbereiche ausdrücken. Diese Farbänderungen müssen sich jeweils deutlich und klar voneinander unterscheiden und zusätzlich intuitiven Charakter besitzen. So erfolgt der erste Farbumschlag von einer leichten Gelbfärbung in ein deutliches Dunkelblau, was mit der generellen Wahrnehmung für kalt einhergeht und ändert die Farbe im Weiteren auf ein helles Rot erst bei Überschreitung der kritischen Temperatur, was in unserem Kulturkreis als heiß oder eben auch Überhitzung intuitiv wahrgenommen wird.

Zusätzlich zu diesen Herausforderungen schafft es die Substanz außerdem, diesen Farbumschlag jeweils in einem sehr engen Temperaturintervall von ca. 1,5° C relativer Temperatur abzudecken und entspricht damit einer ansonsten nicht bekannten Genauigkeit bei einem Indikator der chemisch/physikalisch und irreversibel reagiert.

Zusätzlich zu all den einzigartigen Vorzügen die oben beschrieben werden, ist die Substanz auch bei Raumtemperatur lagerfähig, handhabbar und verarbeitbar. So können die beschriebenen Indikatoren sogar bei Raumtemperatur aufgebracht werden, womit die sehr arbeitsplatzbedenkliche und zeitintensive Handarbeit zur Aufbringung in kühler Umgebung wegfällt.

Die Aktivierung geschieht in Form von Licht mit spezifizierten Wellenlängen. Konkret können dafür unter anderem aber nicht ausschließlich:
- UV Lichtwellenlängen
- lR-Lichtwellenlängen
- NIR-Lichtwellenlängen
verwendet werden.

Bevorzugt werden dafür UV-C Lichtwellen herangezogen, die in einem Wellenlängenbereich von ca. 250-280nm Licht aussenden. Diese Wellenlänge führt aufgrund ihrer Kurzwelligkeit zur notwendigen Polymerisation der verwendeten Substanz, ist aber gleichzeitig für den menschlichen Organismus insofern schädlich, als es bei direkter und in nahmen Abstand stattfindender Bestrahlung auf Haut zu Verbrennungen kommen kann bzw. bei Kontakt mit den Augen auch zu Hornhautverkrümmungen führen kann. Daher muss diese Lichtquelle stets gut abgeschirmt und mit besonderen Vorsichtsmaßnahmen gehandhabt werden. So muss bei Einsatz dieser Lichtquelle ein Augenschutz getragen werden. Außerdem dürfen nackte Hautstellen nicht in den nahen Einflussbereich der Lichtquellen gelangen, und müssen durch UV-C lichtundurchlässige Schichten geschützt werden.

Die Lichtquelle kann durch unterschiedliche Lampen generiert werden. Diese sind vorzugsweise:
- Hochdruck-Quecksilberröhren
- Mitteldruck-Quecksilberröhren
- Niederdruck-Quecksilberröhren

Außerdem können LEDs eingesetzt werden, die in diesem Wellenlängenbereich gute Ergebnisse liefern. Nachteilig sind jedoch die noch hohen Kosten.

Die Bestrahlung kann pulsiert und konstant erfolgen. So sind Geräte im Einsatz, die durch Blitze derart intensive Impulse abgeben, dass es in der Substanz zur Polymerisation kommt. Aber auch eine Permanentlichtquelle kann derart verwendet werden, dass es mittels eines automatischen oder manuellen Shutters zu einem Lichtaustritt kommt, der zu der oben genannten Polymerisation führt.

Das Auftreffen des Lichts kann direkt oder indirekt über entsprechend reflektierende Oberflächen erfolgen. Dabei ist immer darauf zu achten, dass zwischen der Lichtquelle und der zu aktivierenden Substanz keine blockierenden Schichten angebracht sind. So ist die Aktivierung immer berührungslos möglich.

Sie kann aber auch im berührenden Zustand erfolgen. Wichtig ist, dass die lichtemittierende Quelle nicht die Grenztemperatur des Indikators überschreitet, da es ansonsten zu einem Spontanumschlag kommen würde, der nicht gewollt und der Aufgabe des Indikators widersprechen würde.

So muss die, durch die Leistungsaufnahme der Lichtquelle entstehende Überwärme effektiv abgeführt werden. Dies kann durch eine fest-, flüssig- oder gasbasierte Kühlung erfolgen. Im Speziellen können dabei Flüssigkeiten wie Wasser, spezielle Kühlflüssigkeiten oder Festkörper hoher Dichte mit guter Wärmeableitfähigkeit oder permanent in Bewegung befindliche Luft oder Gasströme genutzt werden, die immer die Aufgabe haben, die am Leuchtkörper entstehenden Wärmekapazitäten effektiv abzuführen damit diese nicht im schädlichen Einfluss durch die warme Temperaturen auf den Indikator einwirken können.

Die hierfür verwendeten Geräte sind jedenfalls immer eigens für die vorliegende Anwendung im Bereich der Blutbanken und Blutbeutelhandhabung entwickelt. Es handelt sich dabei um Geräte, die die genaue Wellenlänge der Bestrahlung liefern und gleichzeitig eine effiziente und effektive Aktivierung der Indikatoren zulassen. Spezielle Vorkehrungen wurden zusätzlich getroffen, um diese Geräte in der sterilen Umgebung einer Blutbank oder Erythrozytenkonzentrat-führenden Institution einsatzfähig zu gestalten.

Jedenfalls sind die verwendeten Substanzen immer unter ihrem eigentlichen Schmelzpunkt, der ja den Schmelzpunkt der kritischen Temperatur darstellt, aktivierbar. Die Erfindung schlägt Stoffe vor, die unter Einfluss von unterschiedlichen Behandlungen wie z.B. kurz- und langwelligen Strahlen, Lichtquellen oder ähnliches eine Veränderung ihres Farbeindrucks oder Form oder Gestalt oder ähnliches eindeutig anzeigen. Wichtig und einzigartig für die Erfindung ist, dass es sich ausschließlich um eine und dieselbe Substanz handelt, die sowohl die Aktivierbarkeit als auch die Anzeige der Überschreitung der kritischen Temperatur und in dieser Kombination gewährleistet.

In allen Fällen ist darauf zu achten, dass die eingesetzten Stoffe entsprechend der Umweltanforderungen verwertet werden.

Der Farbeindruck als klare Anzeige der Veränderung sowohl nach ausreichender Vorabkühlung als auch nach erfolgter Temperaturüberschreitung ist variabel und kann unterschiedlich gestaltet werden. So sind Farbumschläge möglich, die unter anderem aber nicht ausschließlich folgende Effekte aufweisen:
- Weiß auf rot auf schwarz
- Weiß auf rot auf blau
- Weiß auf grün auf blau
- Weiß auf grün auf schwarz
- Gelb auf rot auf schwarz
- Gelb auf rot auf blau
- Gelb auf grün auf schwarz
- Grün auf rot auf blau
- Grün auf rot auf schwarz

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einem Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:

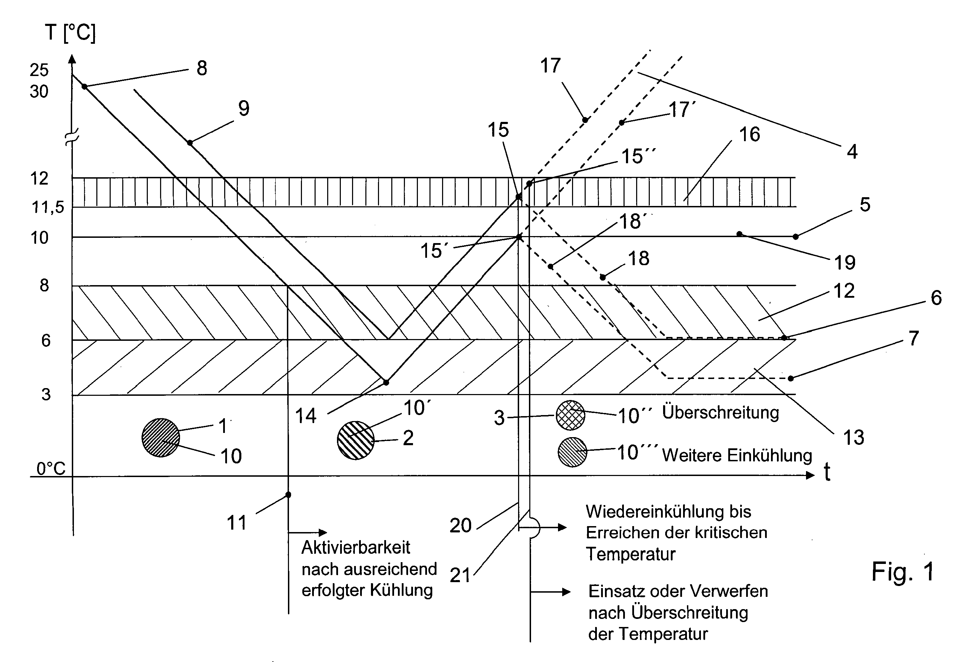

In Figur 1 ist schematisch dargestellt wie der Ablauf eines Erythrozytenkonzentrats zum Zwecke dessen Lagerung und Entnahme vor Transfusion funktioniert. Dabei wird die inaktive Vorrichtung (1) entweder in warmer oder in kühler Umgebung auf das Erythrozytenkonzentrat aufgebracht. Nach Erreichen der ausreichenden und notwendigen Vorabkühlung wird es in seinen aktiven Zustand (2) durch Behandlung mit speziellen Strahlen (im nicht-sichtbaren Bereich) oder Lichtquellen (im sichtbaren Bereich) oder andere, oben erwähnte Aktivierungsmittel übergeführt. Diese Aktivierung kann immer erst nach Erreichen einer mindestens notwendigen Abkühlung auf eine Lagertemperatur (7) im Kern (8) bzw. der ca. 1,5 bis 2°C darüber liegenden Temperatur an der Oberfläche (9) geschehen, aus der sich die entsprechende Aktivierungstemperatur (6) ergibt.

Vor Erreichen der kritischen Kerntemperatur (5) bei 10°C kann das Erythrozytenkonzentrat nochmals eingekühlt und für dessen spätere Verwendung weiter gelagert werden. Dabei verbleibt der Anzeiger in seinem aktiven Status (2). Sollte jedoch die Lagerung bei warmer Umgebungstemperatur und damit die Kerntemperatur (5) und die durch den Temperaturgradienten (4) von 1,5 bis 2°C höhere liegende Oberflächentemperatur (9) überschritten worden sein, geht die Vorrichtung von lhrem aktiven Status (2) über in den Temperatur-überschrittenen Status (3) über, wodurch ein Wiedereinkühlen des Erythrozytenkonzentrats nicht mehr möglich und erlaubt ist.

Es sind insgesamt drei verschiedene Status-Anzeigen der Anzeigevorrichtung vorhanden. Im inaktiven Status 1 der Vorrichtung wird der Blutbeutel für eine beliebige Zeit gekühlt gelagert, wobei für den inaktiven Status diese Zeit durch die maximale Lagerzeit des Blutbeutels in einer gekühlten Atmosphäre beschränkt ist.

Es kann sich hierbei um bis zu 42 Tage Lagerzeit handeln. (Dieser Zeitraum gilt zumindest für Deutschland und eine Reihe anderer Länder).

Der Indikator kann hierbei auf den noch warmen Blutbeutel aufgebracht werden oder auf einem bereits schon gekühlten Blutbeutel. Ein solcher Blutbeutel wird etwa bei 6° C oder im Bereich zwischen 3 bis 6° C gekühlt gehalten.

In der Darstellung der Figur 1 wird davon ausgegangen, dass als Kerntemperatur 8 die Kerntemperatur des Blutbeutels dargestellt ist, während mit der Oberflächentemperatur des Blutbeutels die Kurve 9 dargestellt ist. Es gibt zwischen diesen beiden Kurven einen Oberflächentemperaturgradienten 4 von etwa 1,5 bis 2° C, den der Indikator 10 ausgleicht, indem er von vorneherein auf eine höhere Temperatur eingestellt wird und hierbei davon ausgegangen wird, dass der Oberflächentemperaturgradient zu einer niedrigeren Temperatur (Kerntemperatur) 8 des Blutbeutelinnenraums führt, welche Kerntemperatur 8 zu überwachen ist.

Es kommt also bei der Erfindung darauf an, die Kerntemperatur 8 zu überwachen, wobei die Oberflächentemperatur 9 erfasst wird.

In Darstellung nach Figur 1 wird davon ausgegangen, dass der noch warme Blutbeutel, der sich z. B. auf einer Ausgangstemperatur von 25 bis 30° C befindet, herabgekühlt wird auf eine Temperatur von etwa im Bereich zwischen 3 bis 6°. Der Indikator 10 bleibt im inaktiven Status 1 inaktiv, weil die notwendige für die Scharfschaltung des Indikators 10 erforderliche Umschalttemperatur im Bereich eines Aktivierungsbandes 12 noch nicht erreicht wurde. Erst wenn der Indikator 10 in den Bereich dieses Aktivierungsbandes 12 gelangt, wird er bei Position 11 scharf geschaltet und gelangt dann in den aktiven Status 2. Er kann in einem solchen Lagertemperaturband 13, welches sich im Bereich zwischen 3 bis 6° C befindet, verbleiben, d. h. der Blutbeutel kann in diesem Temperaturbereich ab Entnahme aus dem Körper gelagert werden.

In diesem aktiven Status des Indikators 10 ist er scharf geschaltet, und wenn bei Position 14 die Entnahme des Blutbeutels aus der Kälteumgebung stattfindet, wird dieser durch eine wärmere Außentemperatur aufgeheizt. Die Kerntemperatur 8 als auch die Oberflächentemperatur 9 steigen entsprechend dem dazwischen herrschenden Temperaturgradient an und bei Position 15 bzw. 15' wird eine kritische Kerntemperatur von ca. 10° C erreicht, die einer Oberflächentemperatur bei Position 15 von z.B. 11,5 bis 12° C entspricht.

Bei Position 15 gibt es nun zwei verschiedene Möglichkeiten, die durch zwei verschiedene Kurvenäste 17, 17' bzw. 18, 18' dargestellt sind.

Wird der Blutbeutel ab Position 15 weiter erwärmt, dann folgt die Kurve der Kerntemperatur und der Oberflächentemperatur dem Kurvenast 17 bzw. 17', wobei es zu einer Überschreitung des Alarmbandes 16 kommt und es damit zu einem irreversiblen Farbumschlag des Indikators 10 gemäß Status 3 kommt, wobei dieser Indikator mit 10" angegeben ist.

Als Alternative kann der Blutbeutel ab Position 15 jedoch wieder heruntergekühlt werden, was den Kurvenästen 18 bzw. 18' entspricht, und der Indikator 10 verbleibt dann weiterhin in seinem aktiven Anzeigestatus 10"', der dem Farbumschlag gemäß dem aktiven Status 2 entspricht.

Damit kann bei Position 15 erkannt werden, ob eine irreversible Temperaturüberschreibung stattfand oder ob der Blutbeutel wieder eingekühlt wurde und erlaubt weiter gekühlt gelagert werden kann.

Hier kann der Blutbeutel wiederum im Bereich des Kurvenastes 18, 18' für eine maximale Lagertemperatur von 42 Tagen gelagert werden.

Eine solche Wiedereinkühlung entsprechend dem Kurvenast 18, 18' kann jedoch nur zweimal vorgenommen werden.

Wichtig bei der vorliegenden Erfindung ist demgemäß, dass mit der erfindungsgemäßen Indikatorsubstanz nachgewiesen werden kann, dass eine erforderliche Vorkühlung des Blutbeutels stattgefunden hat und dass damit verhindert wird, dass Blutbeutel im noch warmen Zustand ausgegeben werden, wobei damit die kritische Temperatur des Blutbeutels zu kurz und schnell überschritten werden würde und damit eine Wiedereinkühlung fast nie möglich sein würde, womit der Blutbeutel unbrauchbar wird.

Mit der gegebenen technischen Lehre wird also sichergestellt, dass ein aus dem menschlichen Körper entnommenes Blut stets ordnungsgemäß vorgekühlt wird und für eine bestimmte Lagerzeit im vorgekühlten Zustand gehalten wird, bevor dieser seinem bestimmungsgemäßen Zustand zugeführt wird.

Es gibt die Regel, die besagt, dass im Zwischenraum zwischen der Position 14 und der Position 15 nur ein Zeitraum von 30 Minuten vergehen kann und darf, bis bei einer umgebenden Raumtemperatur von ca. 22 bis 23° C eine effektive Überschreitung der Kerntemperatur 15' bei 10° C stattfindet.

Dies ist durch die Linie 19 gekennzeichnet, welche die 10° C-Grenze anzeigt.

Wenn nun also die Kerntemperatur 8 niemals die Linie 19 überschreitet, kann für eine Wiedereinkühlung des Blutbeutels entsprechend den Kurvenästen 18, 18' gesorgt werden. Damit entfällt das Erfordernis, dass beim Nicht-Transfundieren des Blutbeutels, der die 10° C-Grenze überschritten hat, (Linie 19) der Blutbeutel vernichtet werden muss. Das erfindungsgemäße Temperaturindikationselement macht den Blutbeutel deshalb wieder gebrauchsfähig, indem es anzeigt, dass ein Wiedereinkühlen möglich ist, ohne seine Eigenschaften zu verändern.

Deshalb kennzeichnet die Linie 20 den Zustand des Blutbeutels vor Erreichen der Kerntemperatur von 10° C (Schnitt mit der Linie 19), während die Linie 21 das Überschreiten der Linie 19, d. h. die Überschreitung von 10° C darstellt, was dazu führt, dass der Blutbeutel nicht mehr wieder einkühlbar ist.

Dementsprechend findet der irreversible Farbumschlag des Indikatorelementes 10", der eine Überschreitung der 10° C Schwelle zeigt, im Bereich des Alarmbandes 16 statt (Position 15), wobei keine digitale Temperaturanzeige stattfindet, sondern ein jeweiliger Farbumschlag in einem Intervall von etwa 1,5° C relativer Temperatur stattfindet. Der zeitliche, horizontale Abstand der Position 15 zur 15" entscheidet also über den Umschlag des Indikators 10 entweder nach 10'" oder nach 10". 10'" entspricht jedoch dem gleichen Farbeindruck wie 10', so dass 10'" anzeigt, dass der Blutbeutel wieder eingekühlt werden kann, während der irreversible Farbumschlag bei 10" eine Überschreitung der Temperaturschwelle darstellt und anzeigt, dass der Blutbeutel nicht wieder eingekühlt werden darf.

Der Hauptvorteil der vorliegenden Erfindung liegt dem gemäß darin, dass der Indikator 10 erst nach ausreichender Kühlung scharf geschaltet werden kann und nach Überschreitung der Kerntemperatur von 10° C diese Überschreitung eindeutig und irreversibel anzeigt, wobei beide Farbeindrücke mit ein und dergleichen Substanz durchgeführt werden. Es bedarf also nicht des Einsatzes von zwei unterschiedlichen Farbsubstanzen, die schwer ablesbar sind. Ferner ist besonders vorteilhaft, dass erst der aktive Status 2, in den der Indikator 10' gelangt, die Funktionsweise bei Überschreitung der Temperatur im Status 3 gewährleistet.

### Bezugszeichenliste

- 1: Inaktiver Status Indikator
- 2: Aktiver Status Indikator
- 3: Temperatur-überschrittener Status der Vorrichtung
- 4: Oberflächentemperaturgradient von ca. 1,5 bis 2°C über der Kerntemperatur
- 5: Kritische Kerntemperatur des Erythrozytenkonzentrats bei 10°C
- 6: Notwendige Aktivierungstemperatur für die Vorrichtung
- 7: Vorgeschriebene Lagerungstemperatur der Erythrozytenkonzentrate
- 8: Jeweilige Kerntemperatur des Erythrozytenkonzentrats
- 9: Jeweilige Oberflächentemperatur des Erythrozytenkonzentrats
- 10: Indikator
- 11: Position
- 12: Aktivierungsband
- 13: Lagertemperaturband
- 14: Position
- 15: Position
- 16: Alarmband
- 17: Kurvenast
- 18: Kurvenast
- 19: Linie
- 20: Linie
- 21: Linie

## Patentansprüche

1. Vorrichtung zur irreversiblen Kennzeichnung einer kritischen Temperaturüberschreitung von Blutbeuteln, die eindeutig und irreversibel auf die Überschreitung (3) einer definierten, kritischen Temperatur (5) mit einem optisch sichtbaren Farbumschlag reagiert, **dadurch gekennzeichnet, dass** sie erst nach Erreichen einer ausreichenden, auf die kritische Temperatur bezogenen Unterkühlung (6) deutlich sichtbar aktivierbar (2) ist und diese beiden Merkmale kombiniert mit ein und derselben Substanz abbildet.

2. Vorrichtung (1) nach Anspruch 1, **dadurch gekennzeichnet, dass** deren Aufbringung in einem über oder unter der kritischen Temperatur des Farbumschlags (5) liegenden Temperaturbereichs erfolgt.

3. Vorrichtung (1) nach Anspruch 1 oder 2, **dadurch gekennzeichnet, dass** deren Aufbringung auf Blutkomponenten beinhaltende Systeme, die zu deren Lagerung speziellen Temperaturvorschriften unterliegen, erfolgt.

4. Vorrichtung (1) nach einem der Ansprüche 1 bis 3, **dadurch gekennzeichnet, dass** deren Temperaturanzeige so eingestellt ist, dass Sie einen definierten Temperaturgradienten (4) vom Kern hin zum Rand des Prüflings berücksichtigt und korrekt darstellt.

5. Vorrichtung (1) nach einem der Ansprüche 1 bis 4, **dadurch gekennzeichnet, dass** deren Anzeige (2) und (3) durch Farbgebung direkt visuell oder indirekt über photo-visuelle Abnahme der Farbgradationswerte und elektronische oder mechanische Übersetzung in visuelle, haptische oder akustische Signale stattfindet.

6. Vorrichtung (1) nach einem der Ansprüche 1 bis 5, **dadurch gekennzeichnet, dass** sie vor oder nach der Aufbringung einen unter dem "Temperatur-überschrittenen" liegenden Aktivierungspunkt (6) hat.

7. Vorrichtung (1) nach einem der Ansprüche 1 bis 6, **dadurch gekennzeichnet, dass** sie selbstklebend auf dem zu überwachenden Prüfling haftet.

8. Vorrichtung (1) nach einem der Ansprüche 1 bis 7, **dadurch gekennzeichnet, dass** thermoreaktive Substanzen unter anderem aber nicht ausschließlich durch folgende Verfahren aufgebracht werden können:
- Offsetdruck
- Flexodruck
- Rastertiefdruck
- Tampondruck
- Ink-Jet-Druck
- Dispenser-Applikation
- Rollen-Applikation
- Rakel-Applikation
- Streich-Applikation
- Sprüh-Applikation
- In-Mould Labelling

9. Thermoreaktive Substanzen nach einem der vorher gehenden Patentansprüche 1 bis 8, **dadurch gekennzeichnet, dass** sie alternativ folgende Effekte aufweisen:
- Weiß auf rot auf schwarz oder
- Weiß auf rot auf blau oder
- Weiß auf grün auf blau oder
- Weiß auf grün auf schwarz oder
- Gelb auf rot auf schwarz oder
- Gelb auf rot auf blau oder
- Gelb auf grün auf schwarz oder
- Grün auf rot auf blau oder
- Grün auf rot auf schwarz oder

10. Thermoreaktive Substanz nach einem der vorhergehenden Patentansprüche 1 bis 9, **dadurch gekennzeichnet, dass** sie aus einer Einzelsubstanz aus der nachfolgenden Liste oder einer Kombination der nachfolgenden Substanzen besteht:
- Salze/Oxide mit Phasenübergang im relevanten Temperaturbereich oder
- Salze mit Kristallwasserverlust im relevanten Temperaturbereich oder
- oxidierbare Substanzen oder
- Substanzen mit Schmelzpunkt im relevanten Temperaturbereich oder
- Substanzen mit Zersetzung im relevanten Temperaturbereich oder
- Mehrkomponentensysteme mit Aktivierung im relevanten Temperaturbereich oder
- Monokarbonsäuren oder
- Dikarbonsäuren.

11. Thermoreaktive Substanz nach einem der vorhergehenden Patentansprüche 1 bis 10, **dadurch gekennzeichnet, dass** mit einer der folgenden Quellen in den aktivierten Zustand versetzt wird:
- Ultraviolett Lichtquelle im Wellenlängenbereich von 100 bis 1000 nm oder
- Röntgenstrahlen, e.g. Gamma-Strahlen oder
- Radioaktive Strahlung, bevorzugt jedoch 250 bis 389 nm.

12. Thermoreaktive Substanz nach einem der vorhergehenden Patentansprüche 1 bis 11, **dadurch gekennzeichnet, dass** sie aus einer Dikarbonsäure mit der unten angeführten Strukturformel besteht, die durch weitere Veresterungsschritte, Synthesen aber auch Kombination mit Modifiern und teilweise auch Nukleierungskeimen veredelt und in die endgültige Qualität gebracht wird:
R1-C≡C-C≡C-R2
R1 = R2 oder R1 ≠ R2
R1, R2 = H, Alkyl, Aryl, Alkylether, Alkylsäure, Alkylsäureester, Alkylsäureamid, weitere Diacetylen-Einheit enthaltend, weitere Variationen.
wobei die Parameter R1, R2 bevorzugt aus folgenden Verbindungen bestehen:
R₁ = C₁₂H₂₅
R₂ = C₈H₁₆C(0)OCH₂CH(CH₃)C₂H₅
oder
C₈H₁₆C(0)ONHC₄H₉
oder
C₈H₁₆C(0)ONa

13. Verfahren zum Betrieb eines Temperaturindikators zur irreversiblen Kennzeichnung einer kritischen Temperaturüberschreitung von Blutbeuteln, die eindeutig und irreversibel auf die Überschreitung (3) einer definierten, kritischen Temperatur (5) mit einem optisch sichtbaren Farbumschlag reagiert, **dadurch gekennzeichnet, dass** die zunächst inaktive Vorrichtung (1) entweder in warmer oder in kühler Umgebung auf das Erythrozytenkonzentrat aufgebracht wird und sie nach Erreichen der ausreichenden und notwendigen Vorabkühlung in den aktiven Zustand (2) durch Behandlung mit speziellen Strahlen (im nicht-sichtbaren Bereich) oder Lichtquellen (im sichtbaren Bereich) oder andere, oben erwähnte Aktivierungsmittel übergeführt wird und dass diese Aktivierung erst nach Erreichen einer mindestens notwendigen Abkühlung auf eine Lagertemperatur (7) im Kern (8) bzw. der ca. 1,5 bis 2°C darüber liegenden Temperatur an der Oberfläche (9) erfolgt, aus der sich die entsprechende Aktivierungstemperatur (6) ergibt.

14. Verfahren zum Betrieb eines Temperaturindikators nach einem der vorhergehenden Patentansprüche, **dadurch gekennzeichnet, dass** der Temperaturindikator in seinem aktiven Status (2) vor Erreichen der kritischen Kerntemperatur (5) bei 10°C verbleibt und dass das Erythrozytenkonzentrat nochmals eingekühlt und für dessen spätere Verwendung weiter gelagert werden kann.

15. Verfahren zum Betrieb eines Temperaturindikators nach einem der vorhergehenden Patentansprüche, **dadurch gekennzeichnet, dass** bei Lagerung bei warmer Umgebungstemperatur und Überschreitung der Kerntemperatur (5) die Vorrichtung von lhrem aktiven Status (2) in den Temperatur-überschrittenen Status (3) übergeht, wodurch ein Wiedereinkühlen des Erythrozytenkonzentrats nicht mehr erlaubt ist.

16. Verfahren zum Betrieb eines Temperaturindikators nach einem der vorhergehenden Patentansprüche, **dadurch gekennzeichnet, dass** der Indikator (10) erst nach ausreichender Kühlung scharf geschaltet werden kann und nach Überschreitung der Kerntemperatur von 10° C diese Überschreitung eindeutig und irreversibel anzeigt wird, wobei beide Farbeindrücke mit ein und dergleichen Substanz durchgeführt werden.

## Geänderte Patentansprüche

### Geänderte Patentansprüche gemäss Regel 137(2) EPÜ.

**1.** Verfahren zum Betrieb eines Temperaturindikators (1, 2, 3) mit thermoreaktiver Substanz zur irreversiblen Kennzeichnung einer kritischen Temperaturüberschreitung von Blutbeuteln, die eindeutig und irreversibel auf die Überschreitung (3) einer definierten, kritischen Temperatur (5) mit einem optisch sichtbaren Farbumschlag reagiert, wobei der zunächst inaktive Indikator (1) eine erste Farbe aufweist und entweder in warmer oder in kühler Umgebung auf den Blutbeutel aufgebracht wird und einer ausreichenden und notwendigen Vorabkühlung unterzogen wird, sowie in den aktiven Zustand (2) durch Behandlung mit speziellen Strahlen im nicht-sichtbaren Bereich oder Lichtquellen im sichtbaren Bereich übergeführt wird, **dadurch gekennzeichnet, dass** diese Aktivierung (2) erst nach Erreichen der mindestens notwendigen Abkühlung auf eine Aktivierungstemperatur (6) im Kern (8) von 4-6°C bzw. der ca. 1,5 bis 2°C darüber liegenden Temperatur an der Oberfläche (9) erfolgt, wobei der Indikator (1, 2, 3) ausschließlich eine einzige thermoreaktive Substanz enthält, in der es bei der Bestrahlung zu einer Polymerisation und einem Farbumschlag in eine zweite Farbe kommt, und wobei der Indikator (2) in seinem aktiven Status (2) vor Erreichen der kritischen Kerntemperatur (5) bei 10°C verbleibt und bei Lagerung bei warmer Umgebungstemperatur und Überschreitung der Kerntemperatur (5) von seinem aktiven Status (2) in den Temperatur-überschrittenen Status (3) mit einem weiteren Farbumschlag in eine dritte Farbe übergeht.

**2.** Verfahren nach Anspruch 1, **dadurch gekennzeichnet, dass** die thermoreaktive Substanz des inaktiven Indikators (1) mit einer der folgenden Strahlungsquellen in den aktivierten Zustand (2) versetzt wird:
- Ultraviolett Lichtquelle im Wellenlängenbereich von 100 bis 1000 nm oder
- Röntgenstrahlen, e.g. Gamma-Strahlen oder
- Radioaktive Strahlung, bevorzugt jedoch 250 bis 389 nm.
